Europäisches Patentamt

European Patent Office

Office européen des brevets

(11) Publication number: **0 157 635**
**B1**

(12) **EUROPEAN PATENT SPECIFICATION**

(45) Date of publication of patent specification: **15.11.89**

(21) Application number: **85302313.3**

(22) Date of filing: **02.04.85**

(51) Int. Cl.[4]: **C 08 L 67/02, C 08 L 33/08, C 08 L 63/00**

(54) Polyester composition having superior resistance to hot water.

(30) Priority: **04.04.84 JP 67027/84**

(43) Date of publication of application:
**09.10.85 Bulletin 85/41**

(45) Publication of the grant of the patent:
**15.11.89 Bulletin 89/46**

(84) Designated Contracting States:
**BE DE FR GB IT NL**

(56) References cited:
**WO-A-83/01253**
**DE-A-2 419 968**
**DE-A-2 848 719**
**US-A-4 172 859**
**PATENT ABSTRACTS OF JAPAN, vol. 3, no. 83 (C-52), 18 July 1979, p. 102C52**
**PATENT ABSTRACTS OF JAPAN, vol. 4, no. 98 (C-18)580r, 15 July 1980**

(73) Proprietor: **POLYPLASTICS CO. LTD.**
**30 Azuchimachi 2-chome**
**Higashi-ku Osaka-shi (JP)**

(72) Inventor: **Takahashi, Katsuhiko**
**324, Miyashita**
**Fuji-shi Shizuoka (JP)**
Inventor: **Nakashima, Tuneyasu**
**5-18-22-304, Arima Miyamae-ku**
**Kawasaki-shi Kanagawa (JP)**

(74) Representative: **Livsey, Gilbert Charlesworth Norris et al**
**HYDE, HEIDE & O'DONNELL 146 Buckingham Palace Road**
**London SW1W 9TR (GB)**

Courier Press, Leamington Spa, England.

# EP 0 157 635 B1

**Description**

The present invention relates to a polyalkylene terephthalate resin composition having superior resistance to hot water suitably used in warm or hot water or in an atmosphere of steam.

Polyalkylene terephthalate resins have been widely used in various fields of industry as engineering plastics superior in mechanical and physical properties. Heretofore, a large number of polyalkylene terephthalate resin compositions having improved characteristics according to the properties required in these various fields of industry have been proposed. The present applicant provides herein a polyalkylene terephthalate resin composition having superior resistance to hot water as one of such polyalkylene terephthalate resin compositions. Although polyalkylene terephthalate resins are resistant to hot water to some degree per se, the application of these resins in car parts, which must be used in an atmosphere of hot water, has a problem that they are hydrolyzed after a considerably short time, thereby suffering deterioration in physical properties, in particular, tensile strength and elongation. In the paper-making industry, fabric woven from a monofilament comprising polyethylene terephthalate, a stabiliser and a thermoplastic material has been proposed WO 83/1253) as a material having improved resistance to hydrolytic degradation and abrasion in the hot and wet atmospheres encountered in filtration of wood pulp slurry and conveying formed paper to dryer sections. The addition of phosphorus compounds, diene compounds, oxetane compounds or mixtures thereof to polyalkylene terephthalate resins has also been proposed in order to solve such problems. As yet, however, no generally satisfactory solution has been reached. The present inventors have repeated investigations for solving such a problem by imparting hydrophobicity to the resin and simultaneously forming some network structures in the resin. The present invention was completed on the basis of these investigations and it relates to a polyalkylene terephthalate resin composition having superior resistance to hot water, characterized by comprising a polyalkylene terephthalate resin, to which are added (A) at least one ethylene/alkyl acrylate and (B) at least one epoxy resin having at least two epoxy groups each in an amount according to Claim 1.

As is well known, the polyalkylene terephthalate resin used in the present invention is a polyester obtained by the condensation between terephthalic acid or its lower alkyl ester and an alkylenediol. For example, a polybutylene terephthalate resin, which is produced by an ester-exchange reaction and subsequent polycondensation between dimethyl terephthalate and 1,4-butanediol, are most suitable for the base region in the present invention. Also copolymers containing polybutylene terephthalate as the main ingredient or mixtures thereof with polyethylene terephthalate and the like may be used. In addition, it is desirable in the present invention that the polyalkylene terephthalate resin contains glass fibers in an amount of 0 to 60% by weight therein.

According to the present invention, at least one ethylene/alkyl acrylate, as the ingredient (A), is added to the polyalkylene terephthalate resin in an amount of 1 to 50% by weight based on the total resin composition. If it is added in an amount smaller than that, no sufficient effect can be reached, while if it is added in an amount larger than that, the strength of the resin is deteriorated. Thus it is most preferably added in an amount of 3 to 25% by weight. The ingredient (A) serves to impart elasticity to the resin and is particularly effective in improving impact resistance and elongation. However, the addition of it alone to the polyalkylene terephthalate resin can bring about no appreciable improvement in the resistance to hot water. The effect of improving the resistance to hot water, or to hydrolysis, can be remarkably increased by using these substances together with additives comprising ingredient (B). The ethylene/alkyl acrylate herein refers to a copolymer consisting of ethylene and an alkyl acrylate in an arbitrary ratio, among which an ethylene/ethyl acrylate copolymer is the most useful. The ingredient (B), that is, at least one epoxy resin, is added to the polyalkylene terephthalate resin in addition to the ingredient (A), that is, ethylene/alkyl acrylate in the production of the composition according to the present invention. The ingredient (B) is added in an amount of 0.1 to 10% by weight based on the total resin composition. The addition thereof in an amount smaller than that is ineffective in improving to resistance to hot water by establishing a three-dimensional, or a network structure in the resin, while the addition of a too large amount thereof lowers the fluidity of the resin. Therefore, it is preferably added in an amount of 0.5 to 5% by weight. Although it is effective in improving the resistance to hydrolysis even when added by itself, a remarkable improvement in the resistance to hot water was observed by adding it together with the ingredient (A), that is, anyone of the ethylene/alkyl acrylate and the thermoplastic polyester elastomer. The epoxy resins used in the present invention are diepoxide compounds containing at least two epoxy groups in the molecule and produced by the known methods and include polycondensates between an epihalohydrin such as epichlorhydrin and a diol preferably containing up to 15 carbon atoms, such as diphenylolpropane (hereinafter referred to as diphenol "A"), in an arbitrary ratio; bis(2,3 - epoxypropanol) esters obtained by an esterification reaction between a dicarboxylic acid preferably containing up to 15 carbon atoms, such as terephthalic, phthalic, 2,6 - naphthalene dicarboxylic, adipic, succinic or dodecane dicarboxylic acid, and 2,3 - epoxypropanol; and cycloaliphatic diepoxides preferably containing 5 to 15 carbon atoms, such as cyclooctadiene - (1,5) diepoxide, 1,2,5,6 - diepoxycyclododecane - (9), bicycloheptadiene diepoxide or dicyclopentadiene diepoxide.

Further, known additives, for example, various kinds of stabilizer, lubricant, nucleating agent, plasticizer, releasing agent, antistatic agent, flame resisting agent, organic high-molecular material for improving physical properties, fibrous, acicular, plate-like or powdery inorganic substances or metals, or

2

EP 0 157 635 B1

colouring agents such as carbon black and other dyes and pigments may be suitably added to the composition according to the present invention, if necessary.

The composition according to the present invention may be obtained in the form of pellet by extruding the compound, which was prepared by blending a mixture consisting of a polyalkylene terephthalate resin and given amounts of necessary additives added to said polyalkylene terephthalate resin at once in a blender, an extruder, or by extruding in at least two steps, for example, extruding the compound containing part of said necessary additives and then adding the rest of the necessary additives followed by extruding the resulting compound again. In addition, some kinds of ingredient may be added in the molding process in order to obtain molded products containing them.

The obtained pellets of the composition are preliminarily dried and then molded to obtain molded products comprising a polybutylene terephthalate composition having superior resistance to hot water.

All of the amounts of ingredients described in examples and comparative examples are represented in % by weight.

Examples 1 to 4

Given amounts of substances A and B as shown in Table 1 are added to a polybutylene terephthalate resin (PBT) containing glass fibers in an amount of 30%. The resulting mixture is blended in a blender and then extruded in an extruder to prepare pellets. The resulting pellets are dried in an atmosphere of hot air all night and then molded in a molding machine to prepare test pieces. The test pieces, which were dipped in hot water of 95°C for given periods, were tested on tensile strength in order to study changes in the tensile strength with time. These tests were carried out in accordance with ASTM D638-58T on a Toyo-Baldwin tension tester UTM-1-2500. The results are shown in Table 1.

Comparative Examples 1 to 4

The test pieces are prepared in the same manner as in Examples except that both or either of said substances A and B are not added. The tests were carried out under the same conditions as in Examples. The results are shown in Table 1.

As to numerical values described in Table 1, those in the upper columns indicate the tensile strength (kg/cm²), those in the lower columns indicating the elongation (%), and those in parentheses indicating the retaining rate when the initial value is 1.00.

As understood from the results obtained in Examples and Comparative Examples, the composition according to the present invention can remarkably prolong the service life of resins for the uses requiring resistance to hot water and hold superior values of tensile strength and elongation even in an atmosphere of warm of hot water. Therefore, the present invention can provide a polybutylene terephthalate resin composition remarkably suitable for use in the presence of water, in particular, at higher temperatures, for example, for use as car parts.

3

TABLE 1

| | | | Example 1 | Example 2 | Example 3 |
|---|---|---|---|---|---|
| Composition (% by weight) | PBT containing 30% glass fibers | | 95.2 | 89.2 | 79.2 |
| | Substance A | | 4[*1] | 10[*1] | 20[*1] |
| | Substance B | | 0.8[*4] | 0.8[*4] | 0.8[*4] |
| | Others | | — | — | — |
| Number of days during which the test pieces are dipped | 0 day | Tensile strength | 1251 (1.00) | 1180 (1.00) | 993 (1.00) |
| | | Elongation | 3.0 (1.00) | 3.3 (1.00) | 4.1 (1.00) |
| | 5 days | Tensile strength | 1151 (0.92) | 1086 (0.92) | 884 (0.89) |
| | | Elongation | 2.7 (0.89) | 2.9 (0.88) | 3.6 (0.88) |
| | 10 days | Tensile strength | 1101 (0.81) | 1027 (0.87) | 794 (0.80) |
| | | Elongation | 2.5 (0.84) | 2.7 (0.82) | 3.6 (0.87) |
| | 15 days | Tensile strength | 1038 (0.83) | 991 (0.84) | 725 (0.73) |
| | | Elongation | 2.0 (0.69) | 2.3 (0.70) | 3.2 (0.77) |
| | 20 days | Tensile strength | 888 (0.71) | 885 (0.75) | 636 (0.64) |
| | | Elongation | 1.8 (0.60) | 2.0 (0.61) | 2.8 (0.68) |
| | 30 days | Tensile strength | 625 (0.50) | 637 (0.54) | 417 (0.42) |
| | | Elongation | 1.35 (0.45) | 1.6 (0.47) | 2.2 (0.54) |

TABLE 1 (continued)

| | | | Comparative Example 1 | Comparative Example 2 | Comparative Example 3 | Comparative Example 4 |
|---|---|---|---|---|---|---|
| Composition (% by weight) | PBT containing 30% glass fibers | | 100 | 90 | 89.5 | 98 |
| | Substance A | | — | 10*1 | 10*1 | — |
| | Substance B | | — | — | — | 2*4 |
| | Others | | — | — | 0.5*5 | — |
| Number of days during which the test pieces are dipped | 0 day | Tensile strength | 1376 (1.00) | 1180 (1.00) | 1170 (1.00) | 1367 (1.00) |
| | | Elongation | 2.8 (1.00) | 2.9 (1.00) | 2.8 (1.00) | 2.8 (1.00) |
| | 5 days | Tensile strength | 1228 (0.82) | 1038 (0.88) | 550 (0.47) | 1217 (0.89) |
| | | Elongation | 2.2 (0.77) | 2.3 (0.79) | 0.9 (0.31) | 2.3 (0.81) |
| | 10 days | Tensile strength | 936 (0.68) | 850 (0.72) | 363 (0.31) | 1025 (0.75) |
| | | Elongation | 1.5 (0.52) | 1.6 (0.54) | 0.6 (0.23) | 0.8 (0.76) |
| | 15 days | Tensile strength | 743 (0.54) | 578 (0.49) | 257 (0.22) | 875 (0.64) |
| | | Elongation | 1.0 (0.36) | 1.1 (0.39) | 0.5 (0.18) | 1.4 (0.51) |
| | 20 days | Tensile strength | 481 (0.35) | — | — | — |
| | | Elongation | 0.8 (0.29) | — | — | — |
| | 30 days | Tensile strength | 358 (0.26) | — | — | — |
| | | Elongation | 0.5 (0.18) | — | — | — |

(Notes)
*1: Ethylene/ethyl acrylate (EEA-BRT-490, a product of Nihon Unicar Co. Ltd.)
*4: Epoxy resin (Epikote 819, a product of Toray Industries, Inc.)
*5: Tridecyl phosphite

The name Hytrel is a trade mark of the manufacturer.

## Claims

1. A polyalkylene terephthalate resin composition comprising a polyalkylene terephthalate resin,
(A) 1 to 50% by weight based on the total composition of at least one ethylene/alkyl acrylate copolymer and
(B) 0.1 to 10% by weight based on the total composition of at least one epoxy resin containing at least two epoxy groups in the molecule.

2. A composition as set forth in Claim 1, wherein said polyalkylene terephthalate resin contains glass fibers in an amount of 0 to 60% by weight therein.

3. A composition as set forth in any of Claims 1 to 2, wherein said polyalkylene terephthalate resin comprises polybutylene terephthalate as the main ingredient.

4. A composition as set forth in any of Claims 1 to 3, wherein said ethylene/alkyl acrylate copolymer comprises ethylene/ethyl acrylate copolymer.

## Patentansprüche

1. Polyalkylenterephthalat-Harz-Zusammensetzung, umfassend ein Polyalkylen-terephthalat-Harz,

(A) 1 bis 50 Gew.-%, bezogen auf die gesamte Zusammensetzung, wenigstens eines Ethylen/ Alkylacrylat-Copolymers und

(B) 0,1 bis 10 Gew.-%, bezogen auf die gesamte Zusammensetzung, wenigstens eines Epox-Harzes, das wenigstens zwei Epoxy-Gruppen im Molekül enthält.

2. Zusammensetzung nach Anspruch 1, worin das Polyalkylenterephthalat-Harz, darin enthalten, Glasfasern in einer Menge von 0 bis 60 Gew.-%, enthält.

3. Zusammensetzung nach irgendeinem der Ansprüche 1 bis 2, worin das Polyalkylenterephthalat-Harz Polybutylenterephthalat als Hauptbestandteil umfaßt.

4. Zusammensetzung nach irgendeinem der Ansprüche 1 bis 3, worin das Ethylen/Alkylacrylat-Copolymer Ethylen/Ethylacrylat-Copolymer umfaßt.

## Revendications

1. Une composition à base de résine poly(téréphtalate d'alkylène) comprenant une résine poly(téréphtalate d'alkylène), (A) 1 à 50% en poids, par rapport à la composition totale, d'au moins un copolymère éthylène/acrylate d'alkyle et (B) 0,1 à 10% en poids, par rapport à la composition totale, d'au moins une résine époxyde contenant au moins deux groupes époxy dans sa molécule.

2. Une composition telle que formulée dans la revendication 1, dans laquelle ladite résine poly(téréphtalate d'alkylène) renferme des fibres de verre en une proportion de 0 à 60% en poids.

3. Une composition telle que formulée dans l'une quelconque des revendications 1 et 2, dans laquelle ladite résine poly(téréphtalate d'alkylène) comprend du poly(téréphtalate de butylène) comme ingrédient principal.

4. Une composition telle que formulée dans l'une quelconque des revendications 1 à 3, dans laquelle ledit copolymère éthylène/acrylate d'alkyle comprend un copolymère éthylène/acrylate d'éthyle.